# EUROPÄISCHE PATENTSCHRIFT

(11) **EP 2 267 207 B1**
(45) Veröffentlichungstag und Bekanntmachung des Hinweises auf die Patenterteilung: **24.08.2016**
(21) Anmeldenummer: 10004473.4
(22) Anmeldetag: 28.04.2010
(51) Int. Cl.: D06F 31/00, D06F 39/00, D06F 58/20, D06F 95/00

(54) **Verfahren zur Rückgewinnung von Energie aus der Abluft mindestens einer mit Warmluft arbeitenden Wäschereimaschine**
Method for recovering energy from the waste air of at least one laundry treatment machine working with warm air
Procédé de recyclage d'énergie à partir des gaz d'échappement d'au moins une machine de laverie fonctionnant avec de l'air chaud

(30) Priorität: 24.06.2009 DE 102009030477; 10.09.2009 DE 102009041063
(43) Veröffentlichungstag der Anmeldung: 29.12.2010
(73) Patentinhaber: Herbert Kannegiesser GmbH, 32602 Vlotho (DE)
(72) Erfinder: Bringewatt, Wilhelm, 32457 Porta Westfalica (DE); Heinz, Engelbert, 32602 Vlotho (DE)
(74) Vertreter: Möller, Friedrich

(56) Entgegenhaltungen:
- EP-A2- 0 035 617
- EP-A2- 1 849 394
- CA-A1- 2 227 637
- DE-A1- 2 650 190
- DE-A1-102007 043 212
- DE-B3-102008 020 355
- US-A- 3 050 867
- US-A- 4 275 510
- US-A- 4 412 391
- US-A- 4 509 345

## Beschreibung

Die Erfindung betrifft ein Verfahren zur Rückgewinnung von Energie aus der Abluft mindestens einer mit Warmluft arbeitenden Wäschereimaschine gemäß dem Oberbegriff des Anspruchs 1.

In Wäschereien finden verschiedene mit Warmluft betriebene Wäschereimaschinen Verwendung. Solche Wäschereimaschinen benötigen entweder Warmluft oder sie erzeugen Warmluft. Bei diesen Wäschereimaschinen handelt es sich bevorzugt um Trockner, Finisher, insbesondere Tunnelfinisher, und Mangeln. Die Warmluft dieser Wäschereimaschinen enthält noch sehr viel Energie, die beim Ableiten der warmen Abluft ins Freie verloren geht.

Es ist bereits aus zum Beispiel der EP 1 849 394 A2 bekannt, einen Teil der Energie der Abluft vom mit Warmluft arbeitenden oder Warmluft erzeugenden Wäschereimaschinen zurückzugewinnen. Problematisch ist dabei die Verwendung der aus der warmen Abluft zurückgewonnenen Energie, weil die zurückgewonnene Wärmeenergie vielfach woanders und zu einem anderem Zeitpunkt benötigt wird. Außerdem ist die Wiederverwendung der zurückgewonnenen Energie problematisch, weil die warme Abluft nicht kontinuierlich anfällt.

Der Erfindung liegt die Aufgabe zugrunde, ein Verfahren zur Rückgewinnung von Energie aus der Abluft mindestens einer mit Warmluft arbeitenden oder einer Warmluft erzeugenden Wäschereimaschine zu schaffen, das den wirtschaftlichen Einsatz der zurückgewonnenen Energie ermöglicht.

Ein Verfahren zur Lösung dieser Aufgabe weist die Maßnahmen des Anspruchs 1 auf. Demnach ist vorgesehen, die von einem Wärmetauscher oder auch mehreren Wärmetauschern der Abluft gezogene Energie zu verwenden, um frische Behandlungsflüssigkeit wenigstens einer zur Nassbehandlung von Wäsche dienenden Wäschereimaschine aufzuwärmen oder wenigstens vorzuwärmen. Erfindungsgemäß wird somit die zurückgewonnene Energie mindestens einer Wäschereimaschine für eine zu einem anderem Zweck dienende Wäschereimaschine verwendet, und zwar zum Aufwärmen oder Vorwärmen von kalter Behandlungsflüssigkeit, insbesondere Frischwasser. Diese Vorgehensweise ist besonders wirtschaftlich, weil im Vergleich zur Abluft, woraus Energie zurückzugewinnen ist, die Temperatur der aufzuwärmenden Behandlungsflüssigkeit geringer ist. Weiterhin ist es vorgesehen, die den mindestens einen Wärmetauscher verlassende abgekühlte Abluft mindestens einem Trockner oder Finisher zuzuführen und erst danach die Abluft ins Freie abzuleiten. Dadurch ist es möglich, die vom Wärmetauscher der Abluft nicht entzogene Restenergie auch noch zu nutzen, um beispielsweise noch kalte und feuchte Wäsche vorzuwärmen, bevor diese mit frischer Warmluft behandelt wird. Hierdurch kann der Abluft ein noch größerer Teil von Restenergie wirtschaftlich entzogen werden.

Eine zweckmäßige Weiterbildung des Verfahrens sieht es vor, die Abluft mehrerer mit Warmluft arbeitender Wäschereimaschinen durch mindestens einen Wärmeaustauscher, vorzugsweise einen Luft/Flüssigkeits-Wärmetauscher, Energie zu entziehen.

Die efindungsgemäße Vorgehensweise stellt sicher, dass trotz des diskontinuierlichen Betriebs der mit Warmluft arbeitenden Wäschereimaschinen stets von mindestens einer dieser Wäschereimaschinen noch heiße Abluft erzeugt wird, welcher der mindestens eine Wärmetauscher Energie zum Aufwärmen frischer Behandlungsflüssigkeit entziehen kann. Dadurch kann frische Behandlungsflüssigkeit durchgehend vorgewärmt werden, auch wenn an einer mit Warmluft arbeitenden Wäschereimaschine momentan keine Abluft anfällt, weil diese beispielsweise entladen und beladen wird.

Die den mindestens einen Wärmetauscher verlassende Abluft kann verwendet werden, um beim Be- und Entladen abgekühlte Trockner und/oder die darin enthaltene noch feuchte Wäsche oder in einem Finisher, vorzugsweise einem Tunnelfinisher, zu behandelnde Bekleidungsstücke vorzuwärmen. Hierzu reicht die restliche Energie in der bereits im Wärmetauscher abgekühlten Abluft aus, weil die Wärmetauscher verlassende Abluft immer noch wärmer ist als die Temperatur der nassen Wäsche oder kalter Bekleidungsstücke. Die den mindestens einen Wärmetauscher verlassende Abluft kann so nahezu auf Raumtemperatur abgekühlt werden und die dabei noch aus der Abluft gewonnene Energie wirtschaftlich genutzt werden.

Nach einer weiteren, bevorzugten Ausgestaltung des Verfahrens ist es vorgesehen, die von der noch warmen Abluft mindestens einer mit Warmluft arbeitenden Wäschereimaschine vorgewärmte Behandlungsflüssigkeit mit von noch warmer, gebrauchter Behandlungsflüssigkeit mindestens einer zur Nassbehandlung dienenden Wäschereimaschine vorgewärmten Behandlungsflüssigkeit zusammenzuführen. Auf diese Weise kann eine besonders wirksame Erwärmung frischer Behandlungsflüssigkeit erfolgen. Die frische und noch kalte Behandlungsflüssigkeit kann gegebenenfalls auf die in der zur Nassbehandlung dienenden Wäschereimaschine benötigte Temperatur aufgeheizt werden. Weil die Energie gebrauchter Behandlungsflüssigkeit mindestens einer zur Nassbehandlung dienenden Wäschereimaschine und/oder der Abluft der mit Warmluft arbeitenden Wäschereimaschinen entzogenen Energie so ein wirksames Erwärmen frischer Behandlungsflüssigkeit zulassen, ist gegebenenfalls keine zusätzliche Energie zur Aufwärmung der frischen Behandlungsflüssigkeit für die jeweilige zur Nassbehandlung dienenden Wäschereimaschine erforderlich. Das erfindungsgemäße Verfahren ermöglicht es somit, frische aufgeheizte Behandlungsflüssigkeit für mindestens eine zur Nassbehandlung von Wäsche dienende Wäschereimaschine allein mit zurückgewonnener Energie anderer Wäschereimaschinen, und zwar sowohl mit Warmluft arbeitender Wäschereimaschinen als auch zur Nassbehandlung dienender Wäschereimaschinen, zu erzeugen.

Der noch warmen gebrauchten Behandlungsflüssigkeit von zur Nassbehandlung dienenden Wäschereimaschinen wird bevorzugt von mindestens einem Wärmetauscher wenigstens ein Teil der Energie entzogen, so dass die so gewonnene Energie auch zum Aufwärmen frischer Behandlungsflüssigkeit für die zur Nassbehandlung dienenden Wäschereimaschinen dienen kann.

Gemäß einer bevorzugten Weiterbildung des Verfahrens wird die von der Abluft der mit Warmluft arbeitenden Wäschereimaschinen und/oder die gebrauchte Behandlungsflüssigkeit der zur Nassbehandlung dienenden Wäschereimaschinen durch separate Wärmetauscher aufgewärmte Behandlungsflüssigkeit einem gemeinsamen Speicherbehälter zugeführt. Dadurch ist eine Mischung von durch die Abluft und gebrauchte warme Behandlungsflüssigkeit aufgewärmter frischer Behandlungsflüssigkeit, insbesondere Frischwasser, möglich. Hierdurch lässt sich die frische Behandlungsflüssigkeit auf die jeweils gewünschte Temperatur bringen. Die Mischung der unterschiedlich aufgewärmten Behandlungsflüssigkeiten in mindestens einem Speicherbehälter führt auch dazu, dass die von zurückgewonnener Energie aufgeheizte frische Behandlungsflüssigkeit gepuffert wird, bis sie von der jeweiligen zur Nassbehandlung dienenden Wäschereimaschine benötigt wird. Vor allem kann die frische Behandlungsflüssigkeit kontinuierlich von der Abluft der mit Warmluft arbeitenden Wäschereimaschinen erwärmt werden, obwohl die zur Nassbehandlung dienenden Wäschereimaschinen nur zeitweise aufgewärmte Behandlungsflüssigkeit benötigen.

Bevorzugte Ausführungsbeispiele der Erfindung werden nachfolgend anhand der Zeichnung näher erläutert. In dieser zeigen:
- Fig. 1: eine Waschmaschine und Trockner, wobei frische Behandlungsflüssigkeit von der Abwärme der Trockner vorgewärmt wird, und
- Fig. 2: eine Waschmaschine und einen Finisher, wobei frische Behandlungsflüssigkeit von der Abluft des Finishers vorgewärmt wird.

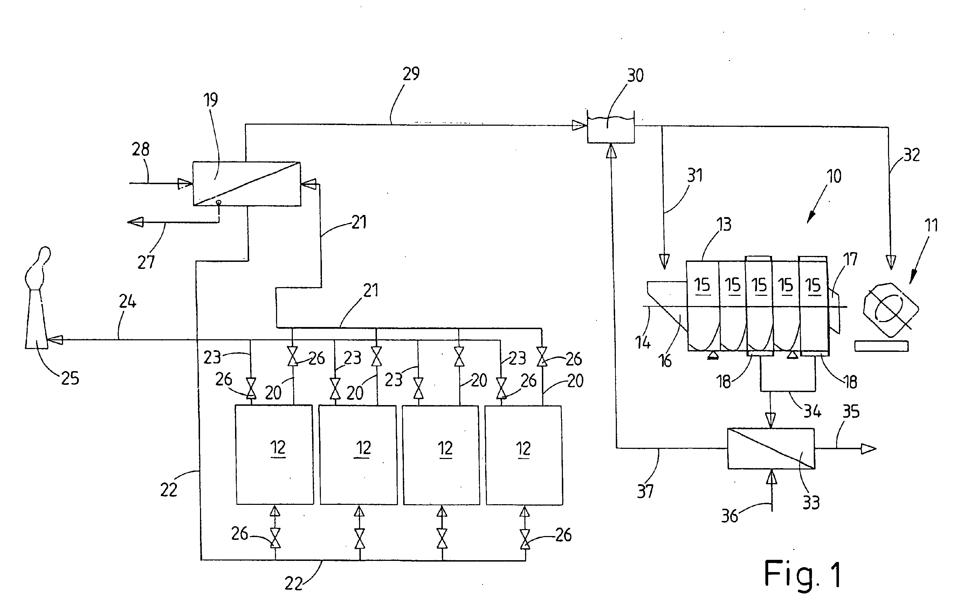

Die Fig. 1 zeigt eine Wäschereianlage mit einer Waschmaschine, und zwar eine Durchlaufwaschmaschine 10, einer nachfolgenden Entwässerungseinrichtung 11 und mehreren Trocknern 12. Mit den genannten Maschinen wird vorzugsweise in gewerblichen Wäschereien Wäsche gewaschen, entwässert und getrocknet.

Die Durchlaufwaschmaschine 10 verfügt über eine längliche Trommel 13, die um eine horizontale Längsmittelachse 14 drehend antreibbar ist. In der Trommel 13 befinden sich mehrere aufeinanderfolgende Kammern 15. Die Kammern 15 bilden in der Trommel 13 mehrere Behandlungszonen, insbesondere eine Vorwaschzone, eine Klarwaschzone und gegebenenfalls eine Spülzone. Die Spülzone kann aber entfallen, wenn das Spülen der Wäsche in der auf die Durchlaufwaschmaschine 10 folgenden Entwässerungseinrichtung 11, beispielsweise einer Wäscheschleuder oder einer Entwässerungspresse, erfolgt. Die hier gezeigte Durchlaufwaschmaschine 10 verfügt über fünf Kammern 15. Hierauf ist die Erfindung aber nicht beschränkt. Die Durchlaufwaschmaschine 10 kann über eine geringere oder auch größere Anzahl von Kammern 15 verfügen. Vor der Trommel 13 ist eine Beladerutsche 16 angeordnet, wodurch zu waschende Wäschestücke in die erste Kammer 15 gelangen. Über eine Entladerutsche 17 werden gewaschene Wäschestücke der Entwässerungseinrichtung 11 zugeführt. Einigen Kammern 15 der Durchlaufwaschmaschine 10 sind feststehende Außentrommeln 18 zugeordnet, wodurch in den betreffenden Kammern 15 noch warme Behandlungsflüssigkeit von den Wäschestücken getrennt werden kann, und zwar vor allem die in den Wäschestücken nicht gebundene Behandlungsflüssigkeit, die sogenannte freie Flotte.

Bei den Trocknern 12 handelt es sich um solche handelsüblicher Bauweise, beispielsweise um Trommeltrockner. Im gezeigten Ausführungsbeispiel sind vier vorzugsweise gleiche Trockner 12 in Reihe nebeneinander bzw. hintereinander angeordnet. Die Erfindung ist hierauf aber nicht beschränkt. Die Anzahl der Trockner 12 kann kleiner oder größer als vier sein. Die Trockner 12 werden mit Heißluft versorgt, die von einem gas- oder ölbetriebenen Brenner oder Dampf aufgeheizt wird. Nachdem die Heißluft die Trockner 12 durchströmt hat, verlässt sie die Trockner 12, wobei die Heißluft mit Feuchtigkeit aus den zu trocknenden Wäschestücken in den Trocknern 12 angereichert ist. Die feuchte Abluft aus den Trocknern 12 weist noch eine recht hohe Temperatur auf. Es kann deshalb von heißer Abluft gesprochen werden, die die Trockner 12 verlässt.

Allen vier Trocknern 12 ist ein gemeinsamer Wärmetauscher 19 zugeordnet. Hierbei handelt es sich um einen Luft/Flüssigkeits-Wärmetauscher. Die heiße feuchte Abluft gelangt aus jedem Trockner 12 über eine Abluftleitung 20 zu einer Sammelleitung 21, in der die heiße Abluft aller vier Trockner 12 zusammengeführt wird. Die heiße Abluft wird über die Sammelleitung 21 zur warmen Seite des Wärmetauschers 19 geleitet. Im Wärmetauscher 19 abgekühlte Abluft verlässt den Wärmetauscher 19 über eine Rücklaufleitung 22, die zum Eingang jedes Trockners 12 zurückführt. Die abgekühlte Abluft kann somit erneut den Trocknern 12 zugeführt werden. Am Ausgang jedes Trockners 12 befindet sich eine zweite Abluftleitung 23, die über eine Sammelleitung 24 zu einem Abluftkamin, beispielsweise einem Schornstein 25, geführt ist. In allen Abluftleitungen 20 und 23 und auch im zu jedem Trockner 12 führenden Ast der Rücklaufleitung 22 befindet sich ein wahlweise zu öffnendes oder zu verschließendes Ventil 26.

Von der noch warmen, feuchten Abluft durchströmten warmen Seite des Wärmetauschers 19 zweigt eine Kondensatleitung 27 ab, wodurch beim Abkühlen der Abluft sich auf der warmen Seite des Wärmetauschers 19 sammelndes Kondensat abführbar ist.

Der kalten Seite des Wärmetauschers 19 wird über eine Zuleitung 28 frische und kalte Behandlungsflüssigkeit, vorzugsweise Frischwasser, zugeführt. Dieses kalte Frischwasser wird im Wärmetauscher 19 von der Abluft der Trockner 12 aufgewärmt oder zumindest vorgewärmt. Über eine Verbindungsleitung 29 gelangt die vorgewärmte frische Behandlungsflüssigkeit, vorzugsweise vorgewärmtes Frischwasser, zu einem Speicherbehälter 30 zur Frischwasserversorgung mindestens der Durchlaufwaschmaschine 10. Im gezeigten Ausführungsbeispiel, wo das Spülen der Wäschestücke in der Entwässerungseinrichtung 11 stattfindet, wird vom Speicherbehälter 30 auch vorgewärmtes Frischwasser zur Entwässerungseinrichtung 11 geleitet. Zu diesem Zweck sind vom Speicherbehälter 30 Versorgungsleitungen 31 und 32 zur Beladerutsche 16 der Durchlaufwaschmaschine 10 und zur Entwässerungseinrichtung 11 geführt. Es ist auch denkbar, weitere Versorgungsleitungen zu einer ausgewählten Kammer 15 der Durchlaufwaschmaschine 10 zu führen. Wenn zum Beispiel die Durchlaufwaschmaschine 10 auch zum Spülen der Wäschestücke dient, ist die Versorgungsleitung 32 zur die Spülzone bildenden vorzugsweise letzten Kammer 15 der Durchlaufwaschmaschine 10 geführt. Dann wird der Entwässerungseinrichtung 11 kein vorgewärmtes Frischwasser aus dem Speicherbehälter 30 zugeführt.

Ein weiterer Wärmetauscher 33 ist im gezeigten Ausführungsbeispiel der Durchlaufwaschmaschine 10 zugeordnet. Es handelt sich hierbei um einen Wasser/Wasser-Wärmetauscher 33. Die von den Wäschestücken im Bereich der Kammern 15 mit Außentrommeln 18 abzuführende ungebundene Behandlungsflüssigkeit (freie Flotte) gelangt über eine Ablaufleitung 34 zur warmen Seite des Wärmetauschers 33. Die dem Wärmetauscher 33 zugeführte warme Behandlungsflüssigkeit aus der Durchlaufwaschmaschine 10 wird nach dem Abkühlen im Wärmetauscher 33 über eine Ableitung 35 in einen Abfluss oder dergleichen geleitet. Zur kalten Seite des Wärmetauschers 33 führt eine Zuleitung 36 für frische Behandlungsflüssigkeit für die Durchlaufwaschmaschine 10 und die Entwässerungseinrichtung 11, insbesondere kaltes Frischwasser. Das kalte Frischwasser wird auf der kalten Seite des Wärmetauschers 33 von der Restenergie der noch warmen, gebrauchten Behandlungsflüssigkeit von der Durchlaufwaschmaschine 10 vorgewärmt und über eine Verbindungsleitung 37 zum Speicherbehälter 30 geführt.

Es ist auch ein alternatives Ausführungsbeispiel der Erfindung denkbar, bei dem die frische Behandlungsflüssigkeit im Speicherbehälter 30 nur vom den Trocknern 12 zugeordneten Wärmetauscher 19 vorwärmbar ist, so dass der der Durchlaufwaschmaschine 10 zugeordnete Wärmetauscher 33 entfällt.

Das erfindungsgemäße Verfahren wird nach nachfolgend unter Bezugnahme auf die vorstehend beschriebene Wäschereianlage der Fig. 1 näher erläutert:
Die Energie in der feuchten, noch heißen Abluft aus allen vier Trocknern 12 wird genutzt zum Aufheizen von Frischwasser für die Durchlaufwaschmaschine 10. Im gezeigten Ausführungsbeispiel, wo die Entwässerungseinrichtung 11 auch zum Spülen der Wäschestücke dient, wird auch Frischwasser für die Entwässerungseinrichtung 11 von der noch warmen, feuchten Abluft der Trockner 12 vorgewärmt.

Die noch heiße Abluft aller vier Trockner 12 wird über die Abluftleitung 20 jedes Trockners 12 in der Sammelleitung 21 zusammengeführt und zusammen auf die warme Seite des Wärmetauschers 19 geleitet. Dabei wird vom Wärmetauscher 19 über die Zuleitung 28 zugeführte kalte Behandlungsflüssigkeit vorgewärmt. Die vom Wärmetauscher 19 vorgewärmte Behandlungsflüssigkeit, und zwar im vorliegenden Falle kaltes Frischwasser, wird über die Verbindungsleitung 29 in den Speicherbehälter 30 geleitet.

Die die warme Seite des Wärmetauschers 19 verlassende abgekühlte Abluft der Trockner 12 weist immer noch eine über der Raumtemperatur liegende Resttemperatur auf. Diese noch warme Abluft wird vom Wärmetauscher 19 über die Rücklaufleitung 22 wiederum zu den Trocknern 12 geführt, wo sie zum Vorwärmen jeweils eines neu beladenen kalten Trockners 12, insbesondere der Trocknertrommel, und der darin enthaltenen kalten, feuchten Wäsche dient. Dabei werden die noch kalte Wäsche und die Trocknertrommel vorgewärmt. Danach verlässt die Trockner 12 nahezu auf Raumtemperatur abgekühlte Abluft. Diese Abluft wird dann über die Abluftleitung 23 und die Sammelleitung 24 ins Freie geleitet, und zwar im gezeigten Ausführungsbeispiel durch einen Schornstein 25.

Die Trockner 12 werden taktweise betrieben. Dieser Betrieb erfolgt zeitlich versetzt, so dass stets mindestens ein Trockner 12 in Betrieb ist, während andere Trockner 12 entladen und beladen werden und dadurch momentan keine noch heiße Abluft erzeugen. Durch die Ventile 26 wird die Abluft der Trockner 12 so gesteuert, dass die Abluft des oder der sich momentan in Betrieb befindlichen Trockner 12 über die Abluftleitung 20 und die Sammelleitung 21 zum Wärmetauscher 19 geleitet wird. Die den Wärmetauscher 19 verlassende Abluft wird über die Rücklaufleitung 22 nur solchen Trocknern 12 zugeführt, die neu beladen wurden und dadurch noch kalt sind. Diese Trockner 12 werden zusammen mit der darin befindlichen kalten und noch feuchten Wäsche von der aus dem Wärmetauscher 19 kommenden und bereits teilweise abgekühlten Abluft vorgewärmt. Durch entsprechendes Betätigen der Ventile 26 ist sichergestellt, dass die zum Vorwärmen des betreffenden Trockners 12 dienende Abluft anschließend über die Abluftleitung 23 und die Sammelleitung 24 zum Schornstein 25 gelangt und nicht über die Abluftleitung 20 und die Sammelleitung 21 zurück zum Wärmetauscher 19.

Dadurch, dass erfindungsgemäß mehrere Trockner 12 dem Wärmetauscher 19 zur Rückgewinnung der in der Abluft der Trockner 12 enthaltenen Wärmeenergie zugeordnet sind, fällt immer bei einigen Trocknern 12 noch heiße, feuchte Abluft an, so dass vom Wärmetauscher 19 stetig Frischwasser vorgewärmt werden kann. Die Erfindung sieht es dazu vor, dass heiße Abluft nur derjenigen Trockner 12, in denen momentan Wäsche getrocknet wird, dem Wärmetauscher 19 zugeführt wird. An Trocknern, die be- und entladen werden und an denen momentan keine heiße Abluft anfällt, ist aber vorgesehen, vor Beginn des Trocknungsvorgangs die kalte Wäsche im jeweiligen Trockner 12 vorzuwärmen durch die noch eine Restwärme aufweisende Abluft, die den Wärmetauscher 19 verlässt. Dabei wird gleichzeitig der kalte Trockner 12, insbesondere die kalte Trocknertrommel, vorgewärmt. Auf diese Weise kann die in der Abluft der Trockner 12 vorhandene Energie nahezu vollständig zurückgewonnen werden.

Das vom Wärmetauscher 19 vorgewärmte Frischwasser wird im Speicherbehälter 30 solange gepuffert, bis es zum Betrieb der Durchlaufwaschmaschine 10 und im gezeigten Ausführungsbeispiel auch der Entwässerungseinrichtung 11 benötigt wird. Bei Bedarf wird das vorgewärmte Frischwasser aus dem Speicherbehälter 30 zum Anfang der Durchlaufwaschmaschine 10, und zwar im gezeigten Ausführungsbeispiel zur Beladerutsche 16, geführt. Wenn die Entwässerungseinrichtung 11 zum Spülen der Wäschestücke Frischwasser benötigt, wird vorgewärmtes Frischwasser aus dem Speicherbehälter 30 auch der Entwässerungseinrichtung 11 zugeführt. Vorgewärmtes Wasser aus dem Speicherbehälter 30 kann auch an anderen Stellen der Durchlaufwaschmaschine 10 zugeführt werden, beispielsweise zur mittleren Kammer an den Anfang der Klarwaschzone oder zur letzten Kammer 15, wenn dort ein Spülen der Wäschestücke stattfindet. In diesem Falle erfolgt keine Zufuhr vorgewärmten Frischwassers zur Entwässerungseinrichtung 11.

Bei der hier gezeigten Wäschereianlage findet auch noch ein Vorwärmen des Frischwassers zum Betrieb der Durchlaufwaschmaschine 10 und/oder Entwässerungseinrichtung 11 durch die in der gebrauchten Behandlungsflüssigkeit enthaltene Restenergie statt. Dazu wird die im Bereich der Außentrommel 18 von den Wäschestücken abgetrennte freie Flotte, wobei es sich um noch warme, aber gebrauchte Behandlungsflüssigkeit handelt, über die Abluftleitung 34 zur warmen Seite des Wärmetauschers 33 geführt. Die abgekühlte Behandlungsflüssigkeit verlässt den Wärmetauscher 33 über die Ableitung 35. In der Regel wird dann die abgekühlte Behandlungsflüssigkeit in den Abfluss geleitet. Der kalten Seite des Wärmetauschers 33 wird über die Zuleitung 36 frische Behandlungsflüssigkeit, bevorzugt kaltes Frischwasser, zugeführt. Von der Restwärme in der gebrauchten und noch warmen Behandlungsflüssigkeit wird das Frischwasser vom Wärmetauscher 33 vorgewärmt und über die Verbindungsleitung 37 ebenfalls in den Speicherbehälter 30 geleitet. Bei einem in der Fig. 1 gezeigten Verfahren gelangt somit in den Speicherbehälter 30 vorgewärmtes Frischwasser von den Trocknern 12 und von der Durchlaufwaschmaschine 10. Eventuell kann warmes Spülwasser, das in der Entwässerungseinrichtung 11 anfällt, auch zum Wärmetauscher 33 geleitet werden, so dass die im Spülwasser aus der Entwässerungseinrichtung 11 noch vorhandene Restenergie ebenfalls zum Vorwärmen von Frischwasser verwendbar ist.

Durch die heiße Abluft der Trockner 12 und/oder gebrauchte, noch warme Behandlungsflüssigkeit der Durchlaufwaschmaschine 10 kann frische Behandlungsflüssigkeit, insbesondere kaltes Frischwasser, soweit aufgewärmt bzw. aufgeheizt werden, dass es die zum Betrieb der Durchlaufwaschmaschine 10 und/oder Entwässerungseinrichtung 11 benötigte Temperatur aufweist. Dann ist keine zusätzliche Energie zum Aufheizen der kalten Behandlungsflüssigkeit erforderlich. Es ist aber auch denkbar, dass die restliche Energie in der Abluft der Trockner 12 und/oder in der gebrauchten Behandlungsflüssigkeit nicht ausreicht, um die frische Behandlungsflüssigkeit vollständig aufzuwärmen bzw. aufzuheizen. Dann findet nur ein Vorwärmen der frischen Behandlungsflüssigkeit statt. Diese vorgewärmte Behandlungsflüssigkeit wird dann beispielsweise im Speicherbehälter 30 auf die benötigte Temperatur aufgeheizt durch eine Zusatzbeheizung.

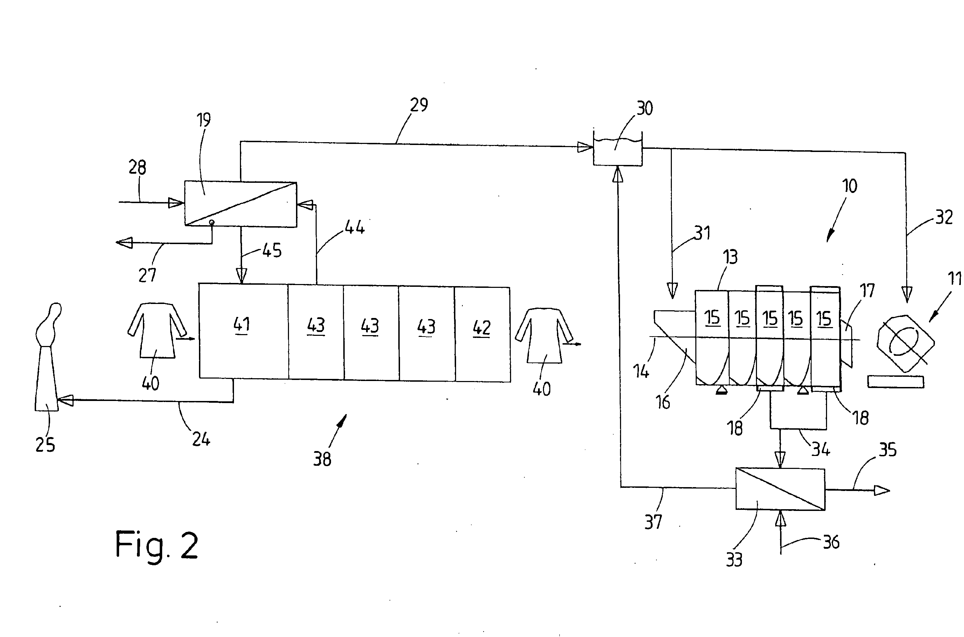

Die Fig. 2 zeigt eine Wäschereianlage, die sich von derjenigen der Fig. 1 nur dadurch unterscheidet, dass die Abwärme eines Finishers, und zwar im gezeigten Ausführungsbeispiel eines Tunnelfinishers 38, verwendet wird, um frische Behandlungsflüssigkeit, insbesondere Frischwasser, für die Durchlaufwaschmaschine 10 und/oder die Entwässerungseinrichtung 11 vorzuwärmen. Für gleiche Gegenstände werden die Bezugsziffern der Fig. 1 verwendet.

Der Tunnelfinisher 38 zum Glätten von Bekleidungsstücken, beispielsweise in der Fig. 2 gezeigte Hemden 40, verfügt über eine Einlaufzone 41 am Anfang der Behandlungsstrecke und eine Auslaufzone 42 am Ende der Behandlungsstrecke. Dazwischen sind mehrere Kammern 43, im gezeigten Ausführungsbeispiel drei Kammern 43, vorgesehen, in denen die Finishbehandlung durch heiße Luft bzw. heißen Dampf erfolgt. Heiße Luft bzw. heißer Dampf werden in mindestens einer Kammer 43, vorzugsweise allen Kammern 43 erzeugt oder der auf die Einlaufzone 41 folgenden ersten Kammer 43 durch eine nicht gezeigte Speiseleitung zugeführt. Die im Tunnelfinisher 38 abgekühlte, aber immer noch heiße Luft wird als Abluft über eine Abluftleitung 44 der warmen Seite des Wärmetauschers 19 zugeführt. Die die warme Seite des Wärmetauschers 19 verlassende abgekühlte, aber immer noch eine gewisse Restwärme aufweisende Abluft wird durch eine weitere Abluftleitung 45 zurückgeführt zur Einlaufzone 41 des Tunnelfinishers 38. Diese noch ausreichend warme Abluft wird verwendet zum Vorwärmen der in die Einlaufzone 41 des Tunnelfinishers 38 eingeförderten kalten Hemden 40 oder sonstiger Bekleidungsstücke. Die anschließend vollständig abgekühlte Luft wird dann über eine weitere Abluftleitung 24 ins Freie geleitet, und zwar im gezeigten Ausführungsbeispiel zum Schornstein 25.

Die vom Wärmetauscher 19 der Abluft aus dem Tunnelfinisher 38 entzogene Energie dient zum Aufheizen frischer Behandlungsflüssigkeit, vorzugsweise kalten Frischwassers. Das vom Wärmetauscher 19 aufgewärmte bzw. aufgeheizte Frischwasser gelangt über die Verbindungsleitung 29 wiederum zum Speicherbehälter 30 für vorgewärmtes Frischwasser zum Betrieb der Durchlaufwaschmaschine 10 und/oder der Entwässerungseinrichtung 11.

Das erfindungsgemäße Verfahren läuft mit der Wäschereianlage der Fig. 2 im Übrigen prinzipiell genauso ab wie bei der Wäschereianlage der Fig. 1. Deswegen wird zur Vermeidung von Wiederholungen auf das im Zusammenhang mit der Fig. 1 beschriebene Verfahren Bezug genommen. Das Verfahren der Fig. 2 unterscheidet sich von demjenigen der Fig. 2 hauptsächlich nur dadurch, dass Abluft des Tunnelfinishers 38 verwendet wird, um mit dem Wärmetauscher 19 kaltes Frischwasser für die Durchlaufwaschmaschine 10 und/oder die Entwässerungseinrichtung 11 vorzuwärmen. Die den Wärmetauscher 19 verlassende abgekühlte Abluft wird nochmals verwendet, um kalte Hemden 40 in der Einlaufzone 41 des Tunnelfinishers 38 vorzuwärmen.

Außerdem wird beim Verfahren der Fig. 2 Energie aus der Abluft einer einzigen mit Warmluft bzw. Dampf arbeitenden Wäschereimaschine, nämlich dem Finisher, insbesondere dem Tunnelfinisher 38, zurückgewonnen.

**Bezugszeichenliste:**

| | | | |
|---|---|---|---|
| 10 | Durchlaufwaschmaschine | 36 | Zuleitung |
| 11 | Entwässerungseinrichtung | 37 | Verbindungsleitung |
| 12 | Trockner | 38 | Tunnelfinisher |
| 13 | Trommel | 39 | |
| 14 | Längsmittelachse | 40 | Hemd |
| 15 | Kammer | 41 | Einlaufzone |
| 16 | Beladerutsche | 42 | Auslaufzone |
| 17 | Entladerutsche | 43 | Kammer |
| 18 | Außentrommel | 44 | Abluftleitung |
| 19 | Wärmetauscher | 45 | Abluftleitung |
| 20 | Abluftleitung | | |
| 21 | Sammelleitung | | |
| 22 | Rücklaufleitung | | |
| 23 | Abluftleitung | | |
| 24 | Sammelleitung | | |
| 25 | Schornstein | | |
| 26 | Ventil | | |
| 27 | Kondensatleitung | | |
| 28 | Zuleitung | | |
| 29 | Verbindungsleitung | | |
| 30 | Speicherbehälter | | |
| 31 | Versorgungsleitung | | |
| 32 | Versorgungsleitung | | |
| 33 | Wärmetauscher | | |
| 34 | Ablaufleitung | | |
| 35 | Ableitung | | |

## Patentansprüche

1. Verfahren zur Rückgewinnung von Energie aus der Abluft mindestens einer mit Warmluft arbeitenden Wäschereimaschine wie Trockner und/oder Finisher, wobei die Abluft mindestens einem Wärmetauscher (19) zugeführt wird und vom Wärmetauscher (19) der Abluft wenigstens ein Teil der darin noch enthaltenen Energie entzogen wird und dass vom Wärmetauscher (19) mindestens ein Teil frischer Behandlungsflüssigkeit wenigstens einer zur Nassbehandlung von Wäsche dienenden Wäschereimaschine erwärmt wird, **dadurch gekennzeichnet, dass** die den mindestens einen Wärmetauscher (19) verlassende abgekühlte Abluft verwendet wird, um einen anderen momentan mit zu trocknender Wäsche zu beladenen Trockner (12) und/oder die darin enthaltene feuchte Wäsche vorzuwärmen oder um in eine Einlaufzone (41) eines Finishers eingeförderte Bekleidungsstücke vorzuwärmen, wobei die Abluft abgekühlt und danach ins Freie geleitet wird.

2. Verfahren nach Anspruch 1, **dadurch gekennzeichnet, dass** der Abluft mehrerer mit Warmluft arbeitenden Wäschereimaschinen oder nur einer mit Warmluft arbeitenden Wäschereimaschine von mindestens einem Wärmetauscher (19), vorzugsweise einem gemeinsamen einzigen Wärmetauscher (19), mindestens ein Teil der darin noch enthaltenen Energie entzogen wird.

3. Verfahren nach Anspruch 1 oder 2,
**dadurch gekennzeichnet, dass** die von der noch warmen Abluft mindestens einer mit Warmluft arbeitenden Wäschereimaschine erwärmte frische Behandlungsflüssigkeit mit frischer Behandlungs-flüssigkeit zusammengeführt wird, die von warmer Behandlungsflüssigkeit mindestens einer zur Nachbehandlung von Wäsche dienenden Wäschereimaschine erwärmt worden ist.

4. Verfahren nach einem der vorhergehenden Ansprüche, **dadurch gekennzeichnet, dass** der warmen Behandlungsflüssigkeit von einer zur Nassbehandlung von Wäsche dienenden Wäschereimaschine von mindestens einem Wärmetauscher (33) Energie entzogen wird, wobei vom Wärmetauscher (33) frische Behandlungsflüssigkeit für mindestens eine zur Nassbehandlung dienende Wäschereimaschine erwärmt wird.

5. Verfahren nach einem der vorhergehenden Ansprüche, **dadurch gekennzeichnet, dass** die mit warmer Abluft mindestens einer mit Warmluft arbeitenden Wäschereimaschine und/oder noch warmer Behandlungsflüssigkeit mindestens einer zur Nassbehandlung dienenden Wäschereimaschine erwärmte frische Behandlungsflüssigkeit einem Speicherbehälter (30) zugeführt wird.

6. Verfahren nach einem der vorhergehenden Ansprüche, **dadurch gekennzeichnet, dass** die in mindestens einem Wärmetauscher (19, 33) vorgewärmte frische Behandlungsflüssigkeit direkt oder aus dem Speicherbehälter (30) einer Durchlaufwaschmaschine (10) und/oder einer Entwässerungseinrichtung (11) zugeführt wird.

## Claims

1. Method for recovering energy from the waste air of at least one laundry machine which operates with warm air, such as a tumble dryer and/or finisher, wherein the waste air is fed to at least one heat exchanger (19) and the heat exchanger (19) withdraws from the waste air at least some of the energy still contained therein, and the heat exchanger (19) heats at least some fresh treatment liquid of at least one laundry machine which serves for the wet treatment of laundry, **characterized in that** the cooled waste air leaving the at least one heat exchanger (19) is used to preheat another dryer (12) which is currently to be loaded with laundry for drying, and/or to preheat the damp laundry contained in said dryer, or to preheat items of clothing conveyed into an entry zone (41) of a finisher, wherein the waste air is cooled and then directed into the open.

2. Method according to Claim 1, **characterized in that** at least one heat exchanger (19), preferably a single, joint heat exchanger (19), withdraws from the waste air of a plurality of laundry machines which operate with warm air, or of just one laundry machine which operates with warm air, at least some of the energy still contained therein.

3. Method according to Claim 1 or 2, **characterized in that** the fresh treatment liquid heated by the still warm waste air of at least one laundry machine which operates with warm air is brought together with fresh treatment liquid which has been heated by warm treatment liquid of at least one laundry machine which serves for the follow-up treatment of laundry.

4. Method according to one of the preceding claims, **characterized in that** at least one heat exchanger (33) withdraws energy from the warm treatment liquid of a laundry machine which serves for the wet treatment of laundry, wherein the heat exchanger (33) heats fresh treatment liquid for at least one wet-treatment laundry machine.

5. Method according to one of the preceding claims, **characterized in that** the fresh treatment liquid heated by warm waste air of at least one laundry machine which operates with warm air and/or by still warm treatment liquid of at least one wet-treatment laundry machine is fed to a storage tank (30).

6. Method according to one of the preceding claims, **characterized in that** the fresh treatment liquid preheated in at least one heat exchanger (19, 33) is fed to a continuous washing machine (10) and/or a drainage device (11) directly or from the storage tank (30).

## Revendications

1. Procédé de récupération d'énergie de l'air évacué par au moins une machine de laverie travaillant avec de l'air chaud, par exemple un séchoir et/ou une finisseuse, dans lequel
l'air évacué est amené à au moins un échangeur de chaleur (19) et au moins une partie de l'énergie que contient encore l'air évacué est extraite par l'échangeur de chaleur (19) et
l'échangeur de chaleur (19) chauffe au moins une partie d'un liquide frais de traitement d'au moins une machine de laverie servant au traitement humide du linge,
**caractérisé en ce que**
l'air évacué refroidi qui quitte le ou les échangeurs de chaleur (19) est utilisé pour préchauffer un autre séchoir (12) qui doit être à ce moment chargé en linge à sécher et/ou le linge humide qu'il contient ou pour préchauffer des pièces d'habillement introduites dans la zone d'entrée (41) d'une finisseuse et
**en ce que** l'air évacué est refroidi et ensuite envoyé à l'extérieur.

2. Procédé selon la revendication 1, **caractérisé en ce qu'**au moins une partie de l'énergie que contient encore l'air évacué par plusieurs machines de laverie travaillant à l'air chaud ou par une seule machine de laverie travaillant à l'air chaud est réchauffé par au moins un échangeur de chaleur (19) et de préférence par un unique échangeur de chaleur (19) commun.

3. Procédé selon les revendications 1 ou 2, **caractérisé en ce que** le liquide frais de traitement, chauffé par l'air évacué encore chaud provenant d'au moins une machine de laverie travaillant à l'air chaud, est rassemblé avec du liquide de traitement frais qui a été chauffé par du liquide de traitement chaud provenant d'au moins une machine de laverie servant au traitement final du linge.

4. Procédé selon l'une des revendications précédentes, **caractérisé en ce que** de l'énergie est extraite par au moins un échangeur de chaleur (33) du liquide chaud de traitement d'une machine de laverie servant au traitement humide de linge, du liquide frais de traitement étant chauffé par l'échangeur de chaleur (33) pour au moins une machine de laverie servant au traitement humide.

5. Procédé selon l'une des revendications précédentes, **caractérisé en ce que** le liquide de traitement frais et chauffé par de l'air chaud évacué par au moins une machine de laverie travaillant avec de l'air chaud et/ou du liquide de traitement encore chaud provenant d'au moins une machine de laverie servant au traitement humide sont amenés à un récipient de réserve (30).

6. Procédé selon l'une des revendications précédentes, **caractérisé en ce que** le liquide de traitement frais préchauffé dans au moins un échangeur de chaleur (19, 33) est amené directement ou en provenance du récipient de réserve (30) à une machine de lavage (10) à traverser et/ou un dispositif d'essorage (11).
